# FASCICULE DE BREVET EUROPEEN

(11) **EP 3 913 209 B1**
(45) Date de publication et mention de la délivrance du brevet: **15.03.2023**
(21) Numéro de dépôt: 21175010.4
(22) Date de dépôt: 20.05.2021
(51) Int. Cl.: F02K 9/46, F02K 9/58, F02K 9/64

(54) **VANNE DE MISE EN FROID POUR MOTEUR-FUSÉE À ERGOLS CRYOTECHNIQUES ET
MOTEUR- FUSÉE COMPRENANT UNE TELLE VANNE DE MISE EN FROID**
KÜHLVENTIL FÜR RAKETENTRIEBWERK MIT KRYOGENEN TREIBSTOFFEN UND RAKETENTRIEBWERK, DAS EIN SOLCHES KÜHLVENTIL UMFASST
COOLING VALVE FOR ROCKET ENGINE WITH CRYOGENIC PROPELLANTS AND ROCKET ENGINE COMPRISING SUCH A COOLING VALVE

(30) Priorité: 20.05.2020 FR 2005278
(43) Date de publication de la demande: 24.11.2021
(73) Titulaire: ArianeGroup SAS, 78130 Les Mureaux (FR)
(72) Inventeur: NOMERANGE, Philippe, 27207 VERNON CEDEX (FR); FAYE, Olivier, 27207 VERNON CEDEX (FR)
(74) Mandataire: Cabinet Beau de Loménie

(56) Documents cités:
- EP-A1- 2 888 467
- FR-A1- 3 049 655
- US-A- 3 132 475

## Description

### Domaine Technique

Le présent exposé concerne une vanne de mise en froid pour moteur-fusée à ergols cryotechniques, un moteur-fusée à ergols cryotechniques comprenant une telle vanne, et un engin spatial équipé d'un tel moteur-fusée.

La « mise en froid » est une opération au cours de laquelle on amène tout ou partie d'une turbopompe ou d'un autre élément d'un moteur-fusée à une température prédéterminée, en général en la refroidissant, pour que ladite turbopompe soit dans des conditions requises de fonctionnement. En particulier, une turbopompe d'alimentation en ergol pour moteur-fusée est mise en froid avant le démarrage de la turbopompe, c'est-à-dire lorsque la turbopompe est à l'arrêt.

Le terme « engin spatial » désigne tout engin destiné à être envoyé dans l'espace. Ce terme désigne notamment, mais pas uniquement, un étage de lanceur spatial, un lanceur spatial comprenant un seul étage, une navette spatiale, un satellite ou équivalent.

### Technique antérieure

Les systèmes connus de mise en froid pour moteur-fusée comprennent généralement des vannes commandées par voie électrique ou pneumatique. Ce type de vanne et le dispositif de commande associé est généralement complexe. Une première simplification de ces dispositifs de commande consiste à commander la fermeture/ouverture de la vanne en fonction de durées prédéterminées, et pas de la température effective au sein du circuit de fluide afin d'éviter des boucles de rétroaction. Toutefois, le refroidissement effectif au sein du circuit fluide n'est pas optimisé. En particulier, la quantité d'ergol consommée lors d'une telle mise en froid est importante pour garantir dans tous les cas le refroidissement à la température requise. Il existe donc un besoin en ce sens.

Dans les documents FR 3049655 A1, EP 2888467 A1 et US 3132475 A, des moteurs-fusée de l'art antérieur sont décrits.

### Exposé de l'invention

Un mode de réalisation concerne une vanne de mise en froid pour moteur-fusée, selon la revendication 1, comprenant un carter pourvu d'un passage s'étendant selon une direction axiale et un clapet logé dans le carter et mobile par rapport au carter selon la direction axiale, le clapet comprenant une tige s'étendant selon la direction axiale et une tête de fermeture/ouverture du passage solidaire de la tige, la tige étant couplée au carter par au moins un élément bilame configuré pour se déformer selon la direction axiale en fonction de la température ambiante au sein du passage

Par la suite, et sauf indication contraire, par « température ambiante » on entend la température ambiante au sein du passage. Par la suite, et sauf indication contraire, par « la tête » on entend la tête de fermeture/ouverture du passage. Par la suite, et sauf indication contraire, par « l'élément bilame » on entend le au moins un élément bilame.

La tête du clapet est configurée pour coopérer avec un siège ménagé sur les parois du passage. Lorsque la tête est en appui contre le siège, le passage est fermé (et donc la vanne est fermée), et inversement lorsque la tête est distante du siège, le passage est ouvert (et donc la vanne est ouverte).

L'élément bilame peut se déformer continûment en fonction de la variation de la température ambiante, ou bien de manière discontinue avec un effet de seuil. Un élément bilame permet d'amplifier le mouvement résultant d'une dilatation thermique, ce qui est intéressant pour ouvrir/fermer une vanne en fonction de la température ambiante.

On comprend que l'élément bilame coopère d'une part avec le carter et d'autre part avec la tige. En se déformant selon la direction axiale, l'élément bilame déplace la tige, et donc l'ensemble du clapet, selon la direction axiale, grâce à quoi la tête s'écarte ou se rapproche du siège de sorte que la vanne s'ouvre ou se ferme.

La vanne peut être configurée pour être fermée lorsque la température ambiante est inférieure ou égale à une température prédéterminée. En d'autres termes, la vanne peut être configurée pour être ouverte en tout ou partie lorsque la température ambiante est supérieure à la température prédéterminée.

Lors des opérations de mise en froid, on fait circuler un fluide de refroidissement, par exemple un ergol cryotechnique, dans un circuit fluide s'étendant au sein ou au voisinage de la ou des parties à refroidir (qui est/sont généralement plus chaude(s) que le fluide de refroidissement), le circuit comprenant au moins une vanne selon le présent exposé, par exemple en aval de la ou des parties à refroidir. Le fluide de refroidissement est généralement plus froid que les parties à refroidir. Tant que les parois de la ou des parties à refroidir ne sont pas à la même température que le fluide de refroidissement, les parties réchauffent le fluide de refroidissement, de sorte que la vanne reste ouverte ou partiellement ouverte. Lorsque les parois de la ou des parties à refroidir atteignent une température prédéterminée, par exemple la température initiale du fluide de refroidissement ±10%, alors l'élément bilame se déforme axialement de manière à fermer le passage. Les parois de la ou des parties à refroidir ayant atteint la température souhaitée, il n'est plus nécessaire de faire circuler du fluide de refroidissement. La vanne est donc fermée.

Dans certains modes de réalisation, la tige est couplée au carter uniquement par deux éléments bilames distincts.

En d'autres termes la vanne peut comprendre strictement deux éléments bilames. Dans cet exemple, les éléments bilames peuvent servir d'une part à déplacer la tige selon la direction axiale et d'autre part au guidage selon la direction axiale de la tige. Une telle configuration est simple, robuste, garante d'une bonne fiabilité, et économique en terme de coûts récurrents.

Dans certains modes de réalisation, la tige présente deux portions d'extrémité opposées selon la direction axiale, chaque portion d'extrémité étant reliée à un unique élément bilame.

Par exemple, une portion d'extrémité peut être une portion qui s'étend jusqu'à 30% de la longueur totale de la tige depuis une extrémité. En reliant chaque portion d'extrémité à un élément bilame on assure un parfait maintien et guidage de la tige selon la direction axiale, ce qui participe à la fiabilité de la vanne et à son bon fonctionnement dans un environnement mécaniquement perturbé, par exemple par des vibrations.

Dans certains modes de réalisation, la vanne comprend au moins un manchon solidaire du carter, ledit manchon s'étendant selon la direction axiale au sein du passage et recevant la tige en coulissement selon la direction axiale, la tige étant couplée au carter par un unique élément bilame.

Par la suite, et sauf indication contraire, par « le manchon » on entend le au moins un manchon.

Dans cet exemple, l'unique élément bilame ne peut servir qu'à déplacer la tige selon la direction axiale tandis que le manchon ne peut servir qu'au guidage selon la direction axiale de la tige. Une telle configuration permet de soulager l'élément bilame et d'assurer un meilleur contrôle de la position selon la direction axiale de la tige.

Dans certains modes de réalisation, la vanne comprend deux manchons, la tige présentant deux portions d'extrémité opposées selon la direction axiale, chaque portion d'extrémité étant engagée dans un manchon.

En emmanchant chaque portion d'extrémité dans un manchon, on assure un parfait maintien et guidage de la tige selon la direction axiale, ce qui participe à la fiabilité de la vanne.

Dans certains modes de réalisation, le au moins un élément bilame présente, vu selon la direction axiale, une forme annulaire ajourée ou une forme générale rectangulaire.

Par « forme générale » on entend une forme considérée dans son ensemble, sans forcément s'attacher à des variations minimes d'angles ou de bords. De telles forment sont particulièrement efficaces et robustes pour déplacer la tige selon la direction axiale tout en laissant suffisamment d'ouverture pour le passage du fluide de refroidissement entre le carter et la tige.

Dans certains modes de réalisation, le au moins un élément bilame est configuré pour se déformer selon la direction axiale afin de fermer le passage lorsque l'élément bilame est soumis à une température ambiante prédéterminée comprise entre 10°K (dix degrés Kelvin) et 150°K (cent cinquante degrés Kelvin), par exemple une température de 20°K±10°K (vingt degrés Kelvin plus ou moins dix degrés Kelvin ) ou 90°K±10°K (quatre-vingt-dix degrés Kelvin plus ou moins dix degrés Kelvin) ou 110°K±10°K (cent dix degrés Kelvin plus ou moins dix degrés Kelvin).

De telles valeurs de températures ambiantes sont adaptées pour des mises en froid de moteur-fusée. Par exemple 20°K±10°K peut être bien adaptée pour du dihydrogène (H₂) liquide, 90°K±10°K pour du dioxygène (O₂) liquide et 110°K±10°K pour du méthane (CH₄) liquide.

Dans certains modes de réalisation, l'élément bilame est constitué de deux matériaux distincts, un des deux matériaux étant un alliage à base de fer et de nickel.

Par exemple, l'alliage à base de fer et de nickel peut être du Fe-Ni36% (connu également sous la dénomination anglo-saxonne 64FeNi) ou de l'INVARO. De tels matériaux présentent une très faible sensibilité à la température, grâce à quoi on peut mieux maitriser le comportement du couple des deux matériaux distincts, et donc de l'élément bilame, en fonction de la température. En effet, on peut alors considérer que la déformation de l'élément bilame n'est fonction que d'un seul de deux matériaux, à savoir le matériau qui n'est pas en alliage à base de fer et de nickel.

Dans certains modes de réalisation, la vanne comprend un élément chauffant configuré pour réchauffer le au moins un élément bilame.

Par exemple, l'élément chauffant comprend une résistance électrique. Par exemple l'élément chauffant est commandé en tout ou rien.

Un tel élément chauffant peut permettre de chauffer l'élément bilame, et de fermer la vanne à une température ambiante plus froide que la température prédéterminée, i.e. laisser la vanne ouverte ou rouvrir la vanne au-delà de la température prédéterminée.

Un mode de réalisation concerne également un moteur-fusée comprenant une vanne de mise en froid selon l'un quelconque des modes de réalisation décrits dans le présent exposé.

Un mode de réalisation concerne également engin spatial comprenant un moteur-fusée selon l'un quelconque des modes de réalisation décrits dans le présent exposé.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente un engin spatial équipé d'un moteur-fusée,
[Fig. 2] La figure 2 représente la vanne du circuit de mise en froid du moteur-fusée de la figure 1,
[Fig. 3] La figure 3 représente l'élément bilame de la vanne de la figure 2, vu selon la direction axiale,
[Fig. 4] La figure 4 représente une variante de l'élément bilame de la figure 3, et
[Fig. 5] La figure 5 représente une variante de la vanne de la figure 2.

### Description des modes de réalisation

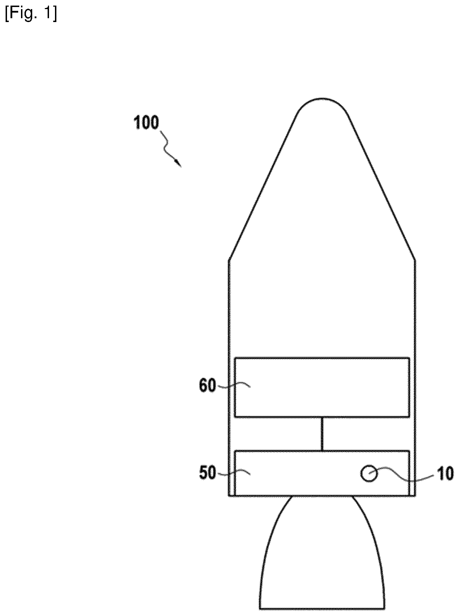

La figure 1 représente un engin spatial 100 équipé d'un moteur-fusée 50 alimenté par un réservoir d'ergol cryotechnique 60. L'ergol cryotechnique contenu dans le réservoir 60 peut servir d'une part à la mise en froid du moteur-fusée 50, mais également comme carburant pour le fonctionnement du moteur-fusée 50. L'ergol utilisé pour la mise en froid peut être en tout ou partie recyclé et par exemple réinjecté dans le réservoir 60, ou bien rejeté. Par la suite, et sauf indication contraire, par « fluide » on entend « fluide de refroidissement ».

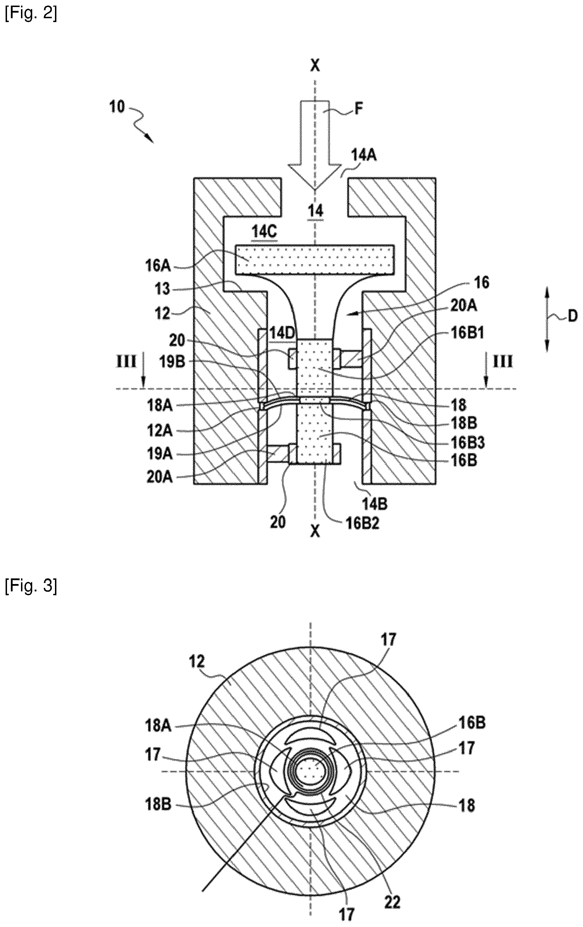

Le moteur-fusée 50 comprend un circuit de mise en froid, qui n'est pas représenté, et qui est connu par ailleurs par l'homme du métier. Le moteur-fusée 50 comprend, par exemple au sein du circuit de mise en froid, une vanne de mise en froid 10 pour moteur-fusée. La figure 2 représente une vue schématique de la vanne de mise en froid 10.

La vanne de mise en froid 10 comprend un carter 12 pourvu d'un passage 14 s'étendant selon une direction axiale X. Dans cet exemple, le carter 12 s'étend également selon la direction axiale X. Le passage 14 présente une entrée de fluide 14A (ou entrée 14A) et d'une sortie de fluide 14B (ou sortie 14B), du fluide pouvant circuler depuis l'entrée 14A vers la sortie 14B. Un clapet 16 est logé dans le carter 12 et est mobile par rapport au carter 12, au sein du carter 12, selon la direction axiale X de manière à fermer/ouvrir le passage 12. Le clapet 16 présente une tête 16A de fermeture/ouverture du passage 14 configurée pour coopérer avec une paroi du passage 14, et une tige 16B s'étendant selon la direction axiale X. La tête 16A et la tige 16B sont disposées dans le passage 12. Dans cet exemple la tête 16A présente une forme de pastille d'axe X et s'étendant transversalement à la direction axiale X. La tête 16A est configurée pour coopérer en appui avec un siège 13 défini par les parois du carter délimitant le passage 14. Le siège 13 est formé par un épaulement annulaire séparant une portion large 14C d'une portion étroite 14D du passage 14. La portion large 14C est large comparée à la portion étroite 14D et inversement la portion étroite est étroite comparativement à la portion large 14C. Dans cet exemple, l'entrée 14A débouche dans la portion large 14C tandis que la portion étroite 14D débouche sur la sortie 14B.

La tige 16B est couplée au carter 12 par au moins un élément bilame 18 configuré pour se déformer selon la direction axiale X en fonction de la température ambiante au sein du passage 14. Dans cet exemple, la tige 16B est couplée au carter 12 via un unique élément bilame 18. Dans cet exemple, la tige 16B présente deux portions extrémité 16B1 et 16B2 opposées selon la direction axiale X, chaque portion d'extrémité 16B1 et 16B2 étant reçue en coulissement selon la direction axiale X au sein d'un manchon 20 solidaire du carter 12. Chaque manchon 20 s'étend selon la direction axiale X au sein du passage 14. En d'autres termes, chaque manchon 20 est d'axe X. Selon une variante, la vanne 10 présente plus de deux manchons 20 ou un seul manchon 20, le ou les manchons pouvant être plus ou moins longs selon la direction axiale X. Chaque manchon 20 est solidaire du carter 12 via un bras radial 20A.

L'élément bilame 18 est engagé d'une part dans une rainure annulaire 16B3 de la tige 16B et d'autre part dans une rainure annulaire 12A du carter 12. Dans cet exemple, la rainure 16B3 est ouverte radialement vers l'extérieur de la vanne 10 tandis que la rainure 12A est ouverte radialement vers l'intérieur de la vanne 10.

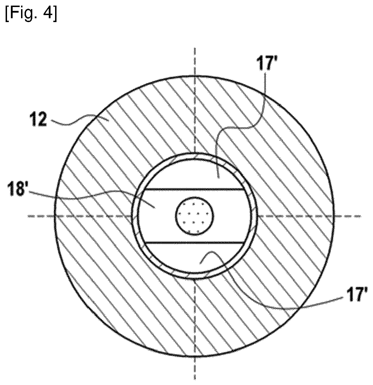

Comme cela est visible sur la figure 3, dans cet exemple, vu selon la direction axiale X, l'élément bilame 18 présente une forme annulaire ajourée, i.e. présentant des jours 17 pour le passage du fluide, le bord annulaire interne 18A étant engagé dans la rainure 16B3 tandis que le bord annulaire externe 18B est engagé dans la rainure 12A. Selon une variante représentée sur la figure 4, vu selon la direction axiale X, un élément bilame 18' présente une forme générale rectangulaire, les petits côtés du rectangle étant engagés dans la rainure 12A. La forme rectangulaire présente un trou central recevant la tige 16B, le bord de ce trou central s'engageant avec la rainure 16B3. Des espaces 17' sont ménagés entre les grands côtés de la forme rectangulaire et les parois délimitant le passage 12 pour le passage du fluide.

La figure 1 représente la vanne 10 en position ouverte. En fonctionnement, le fluide circule selon la flèche F au sein de la vanne 10, depuis l'entrée 12A vers la sortie 12B, ce qui a tendance à pousser la tête 16A en position fermée, c'est-à-dire vers le siège 13. En fonction de la température du fluide, l'élément bilame 18 se déforme selon la direction axiale X selon la flèche D, ce qui a pour effet d'approcher ou d'éloigner la tête 16A vers/depuis le siège 13, grâce à quoi le passage 12 se ferme ou s'ouvre. Dans cet exemple, l'élément bilame 18 est configuré pour se déformer selon la direction axiale X afin de fermer le passage 12 lorsque l'élément bilame 18 est soumis à une température ambiante prédéterminée comprise entre 10°K et 150°K. Dans cet exemple, l'élément bilame 18 est constitué de deux matériaux distincts 19A et 19B, un des deux matériaux, par exemple le matériau 19B, étant un alliage à base de fer et de nickel, par exemple du Fe-Ni36% (connu également sous la dénomination anglo-saxonne 64FeNi) ou de l'INVARO tandis que l'autre matériau, par exemple le matériau 19A, est un acier inoxydable austénitique de la série 300. Dans cet exemple, comme cela est visible sur la figure 3, afin de pouvoir modifier la température effective de fermeture de l'élément bilame 18, la vanne 10 est pourvue d'un élément chauffant 22 configuré pour réchauffer l'élément bilame 18. Dans cet exemple, l'élément chauffant est une résistance électrique 22 collée sur une face de l'élément bilame 18.

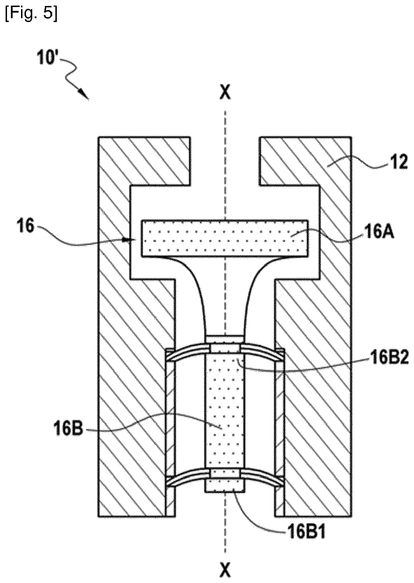

Selon une variante représentée sur la figure 5, la vanne 10' ne comprend pas de manchon 20 et comprend une pluralité d'éléments bilames 18, dans cet exemple deux éléments bilames 18. Des éléments bilames 18' décrits ci-avant peuvent être utilisés à la place des éléments 18, ou bien les éléments 18 et 18' peuvent être utilisés en combinaison.

Dans l'exemple de la figure 5, la tige 16B est couplée au carter 12 uniquement par deux éléments bilames 18 distincts tandis que chaque portion d'extrémité 16B1 et 16B2 est reliée à un unique élément bilame 18. Chaque élément bilame 18 coopère avec la tige 16B et avec le carter 12 de manière similaire à ce qui a été décrit ci-avant. Le fonctionnement de la vanne 10' est similaire à celui de la vanne 10.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables à un dispositif, et inversement, toutes les caractéristiques décrites en référence à un dispositif sont transposables à un procédé.

## Revendications

1. Vanne de mise en froid pour moteur-fusée (10), comprenant un carter (12) pourvu d'un passage (14) s'étendant selon une direction axiale (X) et un clapet (16) logé dans le carter (12) et mobile par rapport au carter (12) selon la direction axiale (X), le clapet (16) comprenant une tige (16B) s'étendant selon la direction axiale (X) et une tête de fermeture/ouverture du passage (16A) solidaire de la tige (16B), la tige (16B) étant couplée au carter (12) par au moins un élément bilame (18, 18') configuré pour se déformer selon la direction axiale (X) en fonction de la température ambiante au sein du passage (14).

2. Vanne de mise en froid (10') selon la revendication 1, dans laquelle la tige (16B) est couplée au carter (12) uniquement par deux éléments bilames (18, 18') distincts.

3. Vanne de mise en froid (10') selon la revendication 2, dans laquelle la tige (16B) présente deux portions d'extrémité (16B1, 16B2) opposées selon la direction axiale (X), chaque portion d'extrémité (16B1, 16B2) étant reliée à un unique élément bilame (18, 18').

4. Vanne de mise en froid (10) selon la revendication 1, comprenant au moins un manchon (20) solidaire du carter (12), ledit manchon (20) s'étendant selon la direction axiale (X) au sein du passage (14) et recevant la tige (16B) en coulissement selon la direction axiale (X), la tige (16B) étant couplée au carter (12) par un unique élément bilame (18, 18').

5. Vanne de mise en froid (10) selon la revendication 4, comprenant deux manchons (20), la tige (16B) présentant deux portions d'extrémité (16B1, 16B2) opposées selon la direction axiale (X), chaque portion d'extrémité (16B1, 16B2) étant engagée dans un manchon (20).

6. Vanne de mise en froid (10, 10') selon l'une quelconque des revendications 1 à 5, dans laquelle le au moins un élément bilame (18, 18') présente, vu selon la direction axiale (X), une forme annulaire ajourée ou une forme générale rectangulaire.

7. Vanne de mise en froid (10, 10') selon l'une quelconque des revendications 1 à 6, dans laquelle le au moins un élément bilame (18, 18') est configuré pour se déformer selon la direction axiale (X) afin de fermer le passage (14) lorsque l'élément bilame (18, 18') est soumis à une température ambiante comprise entre 10°K et 150°K, par exemple une température de 20°K±10°K ou 90°K±10°K ou 110°K±10°K.

8. Vanne de mise en froid (10, 10') selon l'une quelconque des revendications 1 à 7, dans laquelle l'élément bilame (18, 18') est constitué de deux matériaux distincts, un des deux matériaux étant un alliage à base de fer et de nickel.

9. Vanne de mise en froid (10, 10') selon l'une quelconque des revendications 1 à 8, comprenant un élément chauffant (22) configuré pour réchauffer le au moins un élément bilame (18, 18').

10. Moteur-fusée (50) comprenant une vanne de mise en froid (10, 10') selon l'une quelconque des revendications 1 à 9.

## Patentansprüche

1. Kühlventil für Raketentriebwerk (10), das ein Gehäuse (12) umfasst, das mit einem Durchgang (14) versehen ist, der sich in einer axialen Richtung (X) erstreckt, und einem Ventil (16), das in dem Gehäuse (12) untergebracht ist und im Verhältnis zum Gehäuse (12) in der axialen Richtung (X) beweglich ist, wobei das Ventil (16) eine Stange (16B), die sich in der axialen Richtung (X) erstreckt und einen Kopf zum Schließen/Öffnen des Durchgangs (16A) umfasst, der mit der Stange (16B) fest verbunden ist, wobei die Stange (16B) mit dem Gehäuse (12) durch mindestens ein Bimetallelement (18, 18') gekoppelt ist, das ausgelegt ist, um sich innerhalb des Durchgangs (14) in der axialen Richtung (X) in Abhängigkeit von der Umgebungstemperatur zu verformen.

2. Kühlventil (10') nach Anspruch 1, wobei die Stange (16B) mit dem Gehäuse (12) nur durch zwei verschiedene Bimetallelemente (18, 18') gekoppelt ist.

3. Kühlventil (10') nach Anspruch 2, wobei die Stange (16B) zwei in der axialen Richtung (X) gegenüberliegende Endabschnitte (16B1, 16B2) aufweist, wobei jeder Endabschnitt (16B1, 16B2) mit einem einzigen Bimetallelement (18, 18') verbunden ist.

4. Kühlventil (10) nach Anspruch 1, das mindestens eine Manschette (20) umfasst, die mit dem Gehäuse (12) fest verbunden ist, wobei sich die Manschette (20) innerhalb des Durchgangs (14) in der axialen Richtung (X) erstreckt und die Stange (16B) in der axialen Richtung gleitend (X) aufnimmt, wobei die Stange (16B) mit dem Gehäuse (12) durch ein einziges Bimetallelement (18, 18') gekoppelt ist.

5. Kühlventil (10) nach Anspruch 4, das zwei Manschetten (20) umfasst, wobei die Stange (16B) zwei in der axialen Richtung (X) gegenüberliegende Endabschnitte (16B1, 16B2) aufweist, wobei jeder Endabschnitt (16B1, 16B2) in eine Manschette (20) eingreift.

6. Kühlventil (10, 10') nach einem der Ansprüche 1 bis 5, wobei das mindestens eine Bimetallelement (18, 18'), gesehen in der axialen Richtung (X), eine durchbrochene ringförmige Form oder eine rechteckige allgemeine Form aufweist.

7. Kühlventil (10, 10') nach einem der Ansprüche 1 bis 6, wobei das mindestens eine Bimetallelement (18, 18') ausgelegt ist, um sich in der axialen Richtung (X) zu verformen, um den Durchgang (14) zu verschließen, wenn das Bimetallelement (18, 18') einer Umgebungstemperatur ausgesetzt ist, die zwischen 10°K und 150°K, beispielsweise einer Temperatur von 20°K ±10°K oder 90°K ±10°K oder 110°K ±10°K liegt.

8. Kühlventil (10, 10') nach einem der Ansprüche 1 bis 7, wobei das Bimetallelement (18, 18') aus zwei verschiedenen Materialien besteht, wobei eins der zwei Materialien eine Legierung auf der Basis von Eisen und von Nickel ist.

9. Kühlventil (10, 10') nach einem der Ansprüche 1 bis 8, das ein Heizelement (22) umfasst, das ausgelegt ist, um das mindestens eine Bimetallelement (18, 18') zu erwärmen.

10. Raketentriebwerk (50), das ein Kühlventil (10, 10') nach einem der Ansprüche 1 bis 9 umfasst.

## Claims

1. A cooling valve (10) for a rocket engine, comprising a casing (12) provided with a passage (14) extending along an axial direction (X) and a flap (16) housed in the casing (12) and movable relative to the casing (12) along the axial direction (X), the flap (16) comprising a rod (16B) extending along the axial direction (X) and a head for closing/opening the passage (16A) secured to the rod (16B), the rod (16B) being coupled to the casing (12) by at least one bimetal element (18, 18') configured to be deformed along the axial direction (X) as a function of the ambient temperature within the passage (14).

2. A cooling valve (10') according to claim 1, wherein the rod (16B) is coupled to the casing (12) only by two separate bimetal elements (18, 18').

3. The cooling valve (10') according to claim 2, wherein the rod (16B) has two opposite end portions (16B1, 16B2) along the axial direction (X), each end portion (16B1, 16B2) being connected to a single bimetal element (18, 18').

4. The cooling valve (10) according to claim 1, comprising at least one sleeve (20) secured to the casing (12), said sleeve (20) extending along the axial direction (X) within the passage (14) and receiving the rod (16B) slidably along the axial direction (X), the rod (16B) being coupled to the casing (12) by a single bimetal element (18, 18').

5. The cooling valve (10) according to claim 4, comprising two sleeves (20), the rod (16B) having two opposite end portions (16B1, 16B2) along the axial direction (X), each end portion (16B1, 16B2) being engaged in a sleeve (20).

6. The cooling valve (10, 10') according to any one of claims 1 to 5, wherein the at least one bimetal element (18, 18') has, viewed along the axial direction (X), an annular openwork shape or a generally rectangular shape.

7. The cooling valve (10, 10') according to any one of claims 1 to 6, wherein the at least one bimetal element (18, 18') is configured to be deformed along the axial direction (X) in order to close the passage (14) when the bimetal element (18, 18') is subjected to an ambient temperature comprised between 10°K and 150°K, for example a temperature of 20°K±10°K or 90°K±10°K or 110°K±10°K.

8. The cooling valve (10, 10') according to any one of claims 1 to 7, wherein the bimetal element (18, 18') is made of two distinct materials, one of the two materials being an iron and nickel based alloy.

9. The cooling valve (10, 10') according to any one of claims 1 to 8, comprising a heating element (22) configured to heat the at least one bimetal element (18, 18').

10. A rocket engine (50) comprising a cooling valve (10, 10') according to any one of claims 1 to 9.
